Europäisches Patentamt

European Patent Office

Office européen des brevets

(11) Veröffentlichungsnummer: **0 295 539**
**A2**

# (12) EUROPÄISCHE PATENTANMELDUNG

(21) Anmeldenummer: 88109060.9

(22) Anmeldetag: 07.06.88

(51) Int. Cl.⁴: **H01S 3/03**

(30) Priorität: 12.06.87 DE 3719749

(43) Veröffentlichungstag der Anmeldung:
**21.12.88 Patentblatt 88/51**

(84) Benannte Vertragsstaaten:
**DE FR GB IT**

(71) Anmelder: **Siemens Aktiengesellschaft Berlin
und München
Wittelsbacherplatz 2
D-8000 München 2(DE)**

(72) Erfinder: **Krüger, Hans, Dipl.-Phys.
Peralohstrasse 13
D-8000 München 83(DE)**
Erfinder: **Welsch, Wolfgang, Dr.
Fuchsweg 25b
D-8011 Baldham(DE)**

(54) **Gaslaser.**

(57) In einem Gaslaser mit einem vakuumdicht abgeschlossenen Gehäuse und Magneten, die in der
Nähe der Kapillare angeordnet sind, wird eine besonders intensive Wirkung der Magnete bei geringem Aufwand erreicht, indem das Gehäuse ein
Gehäuserohr (1) und Gehäuseteile (3) enthält,
welche mit dem Gehäuserohr (1) vakuumdicht verlötet sind, indem zumindest ein Teil der Magnete (5)
im Gehäuserohr (1) untergebracht ist und indem das
Lot, welches das Gehäuserohr (1) mit den Gehäuseteilen (3) vakuumdicht verbindet, für eine Löttemperatur von weniger als 500° C ausgelegt ist.

Die Erfindung ist für Helium-Neon-Laser besonders vorteilhaft einsetzbar.

FIG 1

## Gaslaser.

Die Erfindung betrifft einen Gaslaser nach dem Oberbegriff des Patentanspruchs 1. Ein derartiger Gaslaser ist aus der US-PS 4 035 741 bekannt. Dort sind Magnete außerhalb des vakuumdicht abgeschlossenen Gehäuses in der Nähe der Kapillare, die über das Gehäuse übersteht, angeordnet. Hierfür ist eine relativ aufwändige Justiereinrichtung erforderlich, um die Magnete gegenüber der Kapillare zu justieren. Die dort gezeigte Anordnung erfaßt grundsätzlich nur einen Teil der Kapillare.

Aus dem IBM Technical Disclosure Bulletin, Vol. 22, Nr. 8A, Jan.1980 ist eine ähnliche Anordnung bekannt, in der eine Reihe von Magneten in der Nähe des Entladungsrohres angeordnet ist.

Die Aufgabe, die dervorliegenden Erfindung zugrundeliegt, besteht in einer Verbesserung der Wirkung der Magnete und darin, besonders preisgünstige Magnete einsetzen zu können.

Diese Aufgabe wird bei einem Gaslaser gemäß dem Oberbegriff durch die kennzeichnenden Merkmale des Patentanspruchs 1 gelöst. Der beschriebene Aufbau eines Gaslasers ermöglicht das Einführen von Magneten in das Gehäuserohr. Magnete verlieren jedoch ihre Magnetisierung bei Erwärmung. Die Erkenntnis, die unserer Erfindung zugrundeliegt, besteht darin, daß relativ preiswerte, handelsübliche Magnete in dem beschriebenen Aufbau einsetzbar sind, ohne ihren Magnetismus zu verlieren, wenn die Löttemperatur beim Zusammenlöten des Gehäuses 500°C nicht überschreitet. Dabei bleibt die Erwärmung der Magnete beim Einlötvorgang so gering, daß die Magnetisierung erhalten bleibt. Dieses ist insbesondere wesentlich, wenn eine nachträgliche Magnetisierung aufgrund der gewünschten Magnetfeldkonfiguration nicht durchführbar ist.

Die Löttemperatur für das vakuumdichte Verlöten des Gehäuses liegt vorteilhaft zwischen etwa 200°C und 400°C. Dabei kann das Gehäuse vorteilhaft ein Gehäuserohr aus Glas oder Keramik enthalten und Gehäuseteile, die aus Sinterglas bestehen, wobei dann als Lot ein Glaslot dient. Eine andere vorteilhafte Aufbauform ist gegeben, indem die Gehäuseteile aus Metall bestehen und über ein Weichlot mit dem aus Glas oder Keramik bestehenden Gehäuserohr vakuumdicht verbunden sind. Dabei wird vorteilhaft in an sich bekannter Weise die zu verlötende Glas- oder Keramikoberfläche mit Metall beschichtet, dessen Schmelzpunkt über der Löttemperatur liegt.

Vorteilhaft können die Magnete mittels Glaslot an der Kapillare befestigt sein. Die Magnete können dabei relativ einfache Formen, z.B. Quaderform besitzen. Die Anforderungen an die Toleranz der Abmessungen sind völlig unkritisch. Der Abstand zum Entladungskanal ist nur durch die Kapillarenwand bestimmt. Der Verlauf des Magnetfeldes im Entladungskanal, der durch die Kapillare gebildet ist, ist somit auch mit kostengünstigen Magneten gut reproduzierbar einzustellen. Durch den Schutz der Magnete gegen mechanische Beanspruchung, der durch das Gehäuserohr gewährleistet ist, bringt auch eine nur stellenweise Befestigung der Magnete im Bereich ihrer Berührung mit der Kapillare eine ausreichende Festigkeit ohne die Gefahr des Ablösens der Magnete bei der Handhabung.

Die Erfindung wird nun anhand von zwei Figuren näher erläutert. Sie ist nicht auf die in den Figurn gezeigten Beispiele beschränkt. Die Figuren zeigen erfindungsgemäße Laser in teilweise geschnittener und gebrochener Ansicht.

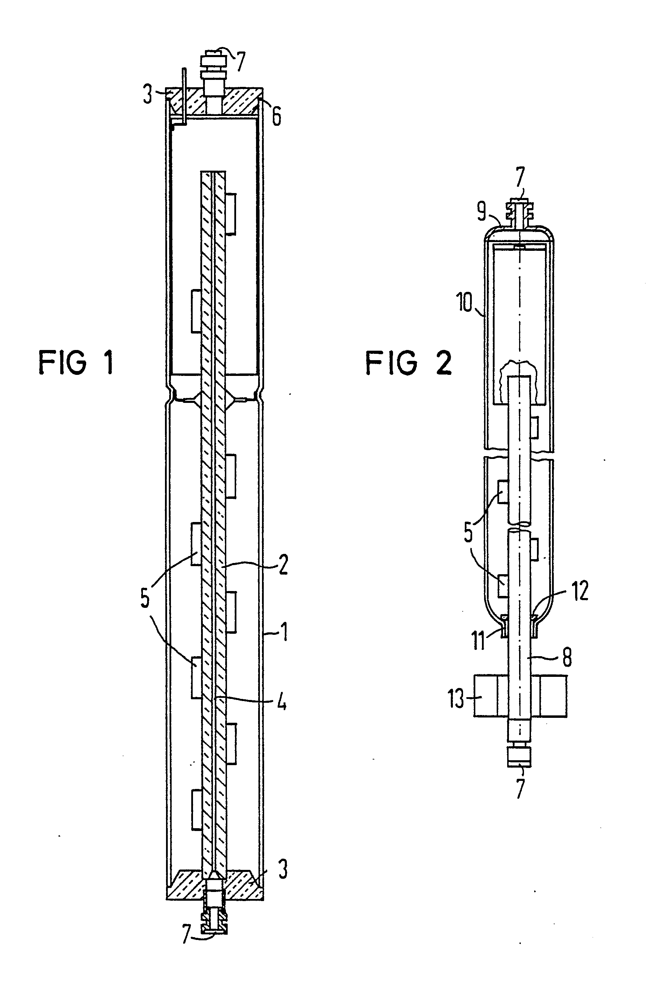

Ein Gehäuse eines Gaslasers gemäß Fig. 1 setzt sich aus einem Gehäuserohr 1 und zwei mit diesem verbundenen Gehäuseteilen 3 zusammen. Die Gehäuseteile 3 bestehen aus Sinterglas und sind mittels Glaslot auf das Gehäuserohr 1 aufgelötet. In das Gehäuserohr 1 ragt eine Kapillare 2 hinein, welche den Entladungskanal 4 für die Laserentladung enthält. Auf die Kapillare 2 sind Permanentmagnete 5 vorzugsweise mittels Glaslot aufgelötet. Zwei Spiegel 7 sind in der Verlängerung des Entladungskanales 4 am entsprechenden Gehäuseteil 3 befestigt und bilden den Laserresonator.

Das Lot zwischen dem Gehäuserohr 1 und dem Gehäuseteil 3 ist vorteilhaft ein Zinnlot. In diesem Fall sind die Stirnflächen des Gehäuserohres 1 und die Lötfläche des Gehäuseteils 3 in an sich bekannter Weise mit einer Metallschicht überzogen.

Auf die Kapillare 2 sind Magnete 5 aufgelötet, welche sich im vakuumdichten Gehäuse befinden. Die Magnete 5 sind vorteilhaft mittels Glaslot an der Kapillare 2 befestigt. Sie sind so dimensioniert und über die Kapillare 2 verteilt, daß eine optimale Magnetfeldkonfiguration gewährleistet ist.

Das Lot, welches das Gehäuserohr 1 mit dem Gehäuseteil 5 verbindet, ist für eine Löttemperatur von höchstens etwa 500°C, vorteilhaft aber für eine Löttemperatur zwischen etwa 200°C und 400°C ausgelegt. Bei 500°C werden im Handel erhältliche Magnete nicht mehr entmagnetisiert, die gewünschte Feldverteilung in der Kapillare kann durch den Einbau entsprechender Magnete eingestellt werden. Dies ist bei einer nachträglichen Magnetisierung der eingebauten Magnete, die bei einer höheren Löttemperatur erforderlich wäre, allenfalls noch in sehr beschränktem Ausmaß möglich, da das Magnetfeld bei einer nachträglichen Magnetisierung in der Regel auch benachbarte Magnete erfaßt und da nicht mehr alle Magnetisierungsrichtungen eingeprägt werden können. Wird das Lot auf eine Löttemperatur zwischen 200°C und 400°C ausgelegt, so lassen sich auch billige handelsübliche Magnete einsetzen.

Als Lot sind Zinnlote gut geeignet. Insbesondere ein SnIn-Lot mit einem Schmelzpunkt zwischen 200°C und 400°C ist vorteilhaft einsetzbar. Dabei wird die Stirnseite des Gehäuserohres 1 und die entsprechende Lötfläche des Gehäuseteiles 3 vorteilhaft mit einer Schicht aus AgPa, AuPa oder Ag versehen. Diese Metallschichten können beispielsweise mittels Siebdruck aufgebracht werden. Das Gehäuserohr besteht dabei vorteilhaft aus Glas oder Keramik und das Gehäuseteil aus Sinterglas.

Bei einer Ausführungsform der Erfindung, in der das Gehäuserohr 1 aus Glas oder Keramik und das Gehäuseteil 3 aus Sinterglas besteht, liegt das Lot vorteilhaft in Form eines Glaslotringes 6 vor. Dadurch wird eine elastische Verbindung erreicht und eine Bruchgefahr infolge temperaturbedingter Spannungen auch bei unterschiedlichen Temperaturausdehnungskoeffizienten der verbundenen Teile ausgeschlossen.

In Fig. 2 ist anstelle eines Gehäuseteiles aus Sinterglas ein Gehäuseteil aus Metall mit einem an den des Gehäuserohres 10 angepaßten Temperaturkoeffizienten eingesetzt. Die Kapillare 8 überragt das Gehäuserohr 10 und trägt an ihrer Stirnseite einen Spiegel 7. Das Gehäuserohr 10 besitzt ein verjüngtes Ende 11, in welches die Kapillare 8 mittels Glaslot 12 vakuumdicht eingelötet ist. Neben erfingungsgemäß angeordneten Magneten 5 können bei dieser Ausführungsform in an sich bekannter Weise Magnetfeldquellen 13 am freiliegenden Teil der Kapillare 8 angeordnet sein.

## Ansprüche

1. Gaslaser mit einem vakuumdicht abgeschlossenen Gehäuse und einer zumindest teilweise im Gehäuse verlaufenden Kapillare, die einen Entladungskanal enthält, indem in der Nähe der Kapillare Magnete angeordnet sind, deren Magnetfeld den Entladungskanal in der Kapillare zumindest über einen Teil seiner Länge durchsetzt, **dadurch gekennzeichnet**, daß das Gehäuse ein Gehäuserohr (1) und zumindest ein Gehäuseteil (3) enthält, welches mit dem Gehäuserohr (1) vakuumdicht verlötet ist, daß zumindest ein Teil der Magnete (5) im Gehäuserohr (1) untergebracht ist und daß das Lot, welches das Gehäuserohr (1) mit dem Gehäuseteil (3) vakuumdicht verbindet, für eine Löttemperatur von höchstens etwa 500°C ausgelegt ist.

2. Gaslaser nach Anspruch 1, **dadurch gekennzeichnet**, daß das Lot für eine Löttemperatur zwischen etwa 200°C und 400°C ausgelegt ist.

3. Gaslaser nach Anspruch 2, **dadurch gekennzeichnet**, daß das Lot ein Sn-Lot ist.

4. Gaslaser nach Anspruch 3, **dadurch gekennzeichnet**, daß das Gehäuserohr aus Glas oder Keramik und das Gehäuseteil aus Sinterglas besteht und daß als Lot ein SnIn-Lot mit einem Schmelzpunkt von etwa 200°C bis 400°C dient und daß die Stirnseite des Gehäuserohres und die entsprechende Lötfläche des Gehäuseteiles mit einer Schicht aus AgPa, AuPa oder Ag versehen sind.

5. Gaslaser nach Anspruch 1, **dadurch gekennzeichnet**, daß das Gehäuserohr aus Glas oder Keramik und das Gehäuseteil aus Sinterglas besteht und daß das Lot in Form eines Glaslotringes vorliegt.

FIG 1

FIG 2